(19) **Europäisches Patentamt**
**European Patent Office**
**Office européen des brevets**

(11) **EP 2 514 730 B1**

(12) **EUROPEAN PATENT SPECIFICATION**

(45) Date of publication and mention
of the grant of the patent:
**03.06.2020 Bulletin 2020/23**

(51) Int Cl.:
***C04B 18/26*** *(2006.01)*      ***C04B 28/04*** *(2006.01)*
***C04B 28/06*** *(2006.01)*      ***C04B 28/14*** *(2006.01)*

(21) Application number: **12164911.5**

(22) Date of filing: **20.04.2012**

(54) **WOOD WOOL LIGHTWEIGHT BUILDING ELEMENTS AND PRODUCTION METHOD THEREOF**

LEICHTE BAUELEMENTE AUS HOLZWOLLE UND HERSTELLUNGSVERFAHREN DAFÜR

ÉLÉMENTS DE CONTRUCTION LÉGERS EN LAINE DE BOIS ET LEUR PROCÉDÉ DE FABRICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.04.2011 DE 102011018300**

(43) Date of publication of application:
**24.10.2012 Bulletin 2012/43**

(73) Proprietor: **Knauf Insulation SPRL**
**4600 Visé (BE)**

(72) Inventors:
• **Moser, Günter**
**9500 Villach (AT)**
• **Gasser, Karl-Heinz**
**9712 Fresach (AT)**
• **Griesser, Horst**
**9712 Fresach (AT)**

(74) Representative: **ARC-IP**
**ARC-IP sprl**
**Rue Emile Francqui 4**
**1435 Mont-Saint-Guibert (BE)**

(56) References cited:
**JP-A- 2007 238 368      US-A- 5 858 083**

EP 2 514 730 B1

**Description**

The present disclosure relates to a binder system, e.g. for use in the production of wood wool lightweight building elements, a process for the production of wood wool lightweight building elements using the binder system and also corresponding wood wool lightweight building elements.

The production of wood wool lightweight building elements, e.g. in a double-belt plant, are sufficiently well known and documented in the prior art. US5858083A discloses cement/board comprising wood fibres. JP2007238368A discloses a wood-cement board. The panels produced using the extrusion process require a maturing period after being subjected to heat that is necessary to provide the panels with a strength required for further manipulation. The changes in dimension - usual with hydraulic binders - so-called "shrinkage and creep", also occur in this maturing period. In the case of the currently used binder systems this can be encountered on a scale outside the tolerance limits defined by standards.

A necessary maturing period for the freshly produced wood wool lightweight building elements of at least three, but often more than fourteen days, results because of these facts. The wood wool lightweight building elements present in panel form, for example, can only be cut to their final dimension after this time, since it can only then be guaranteed that the length changes will from now on occur on a small scale and the prescribed tolerances can be adhered to.

The maturation usually conducted in so-called "hot sheds" therefore results in a disadvantageous delay in the production of the corresponding wood wool lightweight building elements and, moreover, means that an increased expenditure of energy must be supplied to the hot sheds in the form of heat. In addition, this is associated with an increased emission of $CO_2$. The "hot sheds" are storage areas which are kept at a temperature of at least 10°C, preferably at least 15° C, but are otherwise subject to the surrounding environmental conditions of temperature, pressure and humidity.

At the end of a double-belt manufacturing line, the products are commonly cut in to large sheets for storage and maturation in the hot shed prior to the wood wool lightweight building elements being cut to their final desired dimensions from these large sheets.

Therefore, an object forming the basis of the present invention is to reduce the extent of change in length resulting from the aforementioned "shrinkage and creep" so far that this fundamentally lies within the tolerance limits defined as standard, while already after the pressing operation, e.g. in the double belt process, the wood wool lightweight building elements have a sufficient stability in this respect to enable fabrication and trimming to the final dimensions within a short period.

Further objects include: arrangement of a binder system which allows for manufacture in a double-belt plant; and, provision of wood wool lightweight building elements with suitable levels of water resistance and/or humidity resistance to allow them to be used for outside or external building applications.

These objects, individually or collectively, may be achieved according to the present invention by providing a binder system for the production of wood wool lightweight building elements, comprising (i) at least a first and a second binder, which are different from one another, (ii) at least one flow agent, and (iii) at least one reaction accelerator.

According to the present invention the term "wood wool lightweight building element" is not subject to any specific restriction and includes all building elements based on wood wool fibres. The general term "wood wool fibres" in this case relates to organic fibre material, which includes wood fibres, wood wool and cellulose, for example.

The terms "lightweight building element" and "building element" are used synonymously herein and include any type of shaped product, e.g. a panel. The wood wool fibres usually have a length of more than 8 cm, a width of 1 to 6 mm and a thickness of 0.2 to 0.5 mm. The brittle wood wool fibres arranged in irregular geometry are distributed inside the building element in the form of an open-pore three-dimensional lattice and are connected to one another, at least in sections, by means of a binder system.

According to the present invention the term "binder system" relates to any composition, which contains the aforementioned components (i) to (iii), wherein the number of binders, flow agents and reaction accelerators used is not restricted in any way so long as at least two different binders and at least one flow agent and reaction accelerator are used.

The term "binder" used herein is not subject to any specific restriction so long as the binder is suitable, in cooperation with the further components as defined above, for effecting a sufficient final strength of the wood wool lightweight building elements. Examples of such binders are cements and gypsums, but also natural or synthetic resins.

The term "flow agent" used herein is not subject to any specific restriction so long as the flow agent is suitable for producing a viscosity suitable for use of the binder system according to the invention. According to the present invention, a single flow agent can be used, for example, or multiple flow agents suitable for the respective binders can be combined. Examples of flow agents are inorganic alkali or alkaline earth salts and also further organic flow agents known in the prior art.

The term "reaction accelerator" used herein is not subject to any specific restriction and includes all the reaction accelerators necessary for the respective components of the binder system according to the invention. Examples of such reaction accelerators are general accelerating admixtures, cement accelerators etc. and are known to the person skilled in the art. An example of such an accelerator is the use of lithium carbonate in binder systems containing high-alumina cement.

A further embodiment of the present invention relates to the above-defined binder system, wherein the first and second binders are selected independently of one another from the group comprising Portland cement, white cement, aluminous cement, high-alumina cement (also referred to herein as "Istra cement", as commercially available) and gypsum. In particular, one of the first and second binders may be a cement, for example Portland cement, white cement, aluminous cement, high-alumina cement, and the other of the first and second binders may be gypsum.

According to the present invention, the first and second binders, which are different from one another, can also be selected from the same binder type so long as they differ in their composition, granulation or further physical properties. For example, the first and second binders can respectively be a Portland cement with a different composition.

The quantity ratio of the first and second binder (B1 : B2) may lie, for example: in the range of 95:5% to 5:95%; or in the range of 90:10% to 10:90; or in the range 95% : 5% to 65% : 35%; or in the range 90% : 10% to 70%:30.

A further embodiment of the present invention relates to a binder system as defined above, wherein the at least one flow agent is selected from the group comprising polycarboxylate ethers (PCE, e.g. VP217 (ViscoCrete G 217 from Sika)), lignin sulphonates, melamine formaldehyde sulphonates, naphthalene formaldehyde sulphonates, polycarboxylates, hydroxycarboxylic acids and salts thereof as well as combinations thereof.

A further embodiment relates to the binder system as defined above, wherein the at least one reaction accelerator is an accelerating admixture.

According to the present invention the accelerating admixture is not subject to any specific restriction so long as it is suitable for effecting an accelerated (or negatively accelerated, i.e. delayed) hardening of the above-defined binder system, and is preferably selected from the group comprising alkali metal carbonates, alkali metal chlorides, aluminous cements, high-alumina cements, such as e.g. Istra cement 40 and Istra cement 50, and combinations thereof. According to a further embodiment of the above-defined binder system of the present invention, the quantity of binder amounts to 15% to 80% by weight in relation to the total weight of the binder system. For example, the quantity of binder that comprises at least a first and a second binder amounts to 20% to 70% by weight, particularly preferred 25% to 50% by weight, respectively in relation to the total weight of the binder system. In principle, according to the present invention, the abovementioned "accelerators" such as alumina cements and gypsums ensure initial strength for the manipulation of panels, wherein the Portland and white cements in these systems give the final strength of the panels. However, the function of the respective binder components is not determined exclusively from its type (chemical composition), but is, moreover, influenced, for example, by its proportion in the complete binder system and its physical properties (granulation, porosity etc.).

A further embodiment of the present invention relates to the binder system as defined above, wherein the quantity of flow agent amounts to 0.01% to 5% by weight, e.g. 0.05% to 3% by weight or 0.1% to 1% by weight, in relation to the total weight of the binder system.

A further embodiment of the present invention relates to the binder system as defined above, wherein the quantity of reaction accelerators amounts to 0.1% to 20% by weight in relation to the total weight of the binder system. For example, the quantity of reaction accelerators amounts to 0.2% to 20% by weight or 0.5% to 15% by weight, respectively in relation to the total weight of the binder system as defined above.

According to the present invention, the combination of the at least first and second binder is not restricted in any specific way so long as the at least first and the at least second binder are different from one another and are suitable for achieving the necessary binding effect. For example, binder combinations such as Portland cement/gypsum, white cement/gypsum and aluminous cement/gypsum can be used.

In addition to the at least first and at least second binder, the above-defined binder system can also contain further binder components, for example, as third binder component. Accordingly, the present invention also covers binder combinations such as e.g. Portland cement/white cement/gypsum or Portland cement/aluminous cement/gypsum.

An aspect of the present invention relates to a process for the production of a wood wool lightweight building element, comprising (a) providing wood wool fibres, (b) applying the binder system as defined above to the wood wool fibres, (c) applying the mixture of wood wool fibres and binder system obtained under (b) to a support, and (d) pressing the wood wool fibres, if necessary with the supply of thermal energy. The production may use a double-belt plant and/or a pair of moving belts, notably perforated metal belts, between which the combined wood wool fibres and binder system are pressed and/or extruded.

The process may comprise a step (e) of trimming the wood wool lightweight building element and/or cutting the wood wool lightweight building to desired final dimension, notably after a period of less than 72 hours, less than 48 hours, less than 36 hours or less than 24 hours after manufacture.

Preferably, during the period between their manufacture and trimming or cutting to desired final dimension, the wood wool lightweight building element are maintained at a temperature of greater than at least 10°C, preferably at least 15° C, but are otherwise subject to the surrounding environmental conditions of temperature, pressure and humidity i.e. they are kept in hot shed conditions.

According to the present invention, the step of applying the binder system as defined above to the wood wool fibres is not subject to any specific restriction so long as the respective components are present in an effective quantity for a corresponding binding. For example, the proportion of binder in relation to the total wood wool lightweight building panel usually lies in a range of 10% to 40% by mass, preferably in a range of 15% to 35% by mass, or more preferred in a range of 20% to 30% by mass.

According to the present invention, the binder system is applied to the wood wool fibres, for example, in the form of a solution or dispersion, wherein the binder system can contain further solvents or dispersants such as water in suitable quantities to obtain a corresponding solvent or dispersion.

Step (c) of applying the mixture comprising wood wool fibres and binder system obtained under step (b) to a support is likewise not subject to any specific restriction. According to the present invention, in this case the support can be a steel belt of a double-belt plant and also a pressing mould or a corresponding frame. Accordingly, according to the present invention, the pressing of the wood wool fibres is conducted, for example, by means of a double-belt plant or a press, wherein heat can be supplied in a quantity necessary for binding. For example, the temperature at the furnace entrance can amount to about 400° to 600°C, the temperature at the furnace exit can amount to about 150° to 250°C and the temperature at the product itself can amount to about 80° to 150°C, wherein the passage time through the furnace, depending on product thickness, can usually amount to 1 to 15, preferably 1.5 to 10 or more preferred 2 to 7 minutes.

While the process according to the invention enables the production of a wood wool lightweight building element by using a double-belt plant or a pressing mould, the process of the present invention is not restricted hereto and includes all further processes for the production of composite and laminate products known to the person skilled in the art. A further aspect of the present disclosure relates to the use of the binder system as defined above in the production of wood wool lightweight building elements. In addition, a further aspect of the present invention relates to a wood wool lightweight building element, which is obtainable by the process as defined above or which contains the binder system as defined above, e.g. in hardened form.

The figures show:

Fig 1 shows the absolute swelling and shrinking behaviour in the width of a wood wool lightweight building element produced using different binder systems expressed as the change of width ΔW (in mm) plotted against time t after production (in days).

Fig 2 shows the relative swelling and shrinking behaviour in the width of a wood wool lightweight building element produced using different binder systems expressed as the change of width ΔW (in %) plotted against time t after production (in days).

Fig 3 shows the absolute swelling and shrinking behaviour in the length of a wood wool lightweight building element produced using different binder systems expressed as the change of length ΔL (in mm) plotted against time t after production (in days).

Fig 4 shows the relative swelling and shrinking behaviour in the length of a wood wool lightweight building element produced using different binder systems expressed as the change of length ΔL (in %) plotted against time t after production (in days).

Fig 5 shows the bending strength Bs in KPa of a freshly produced wood wool lightweight building element plotted against density $\rho$ in kg/m$^3$.

Fig 6 shows the bending strength Bs in KPa of a wood wool lightweight building element matured for 24 hours plotted against density $\rho$ in kg/m$^3$.

By using the above-defined binder system, in a time period of less than 24 hours the wood wool lightweight building elements reach a sufficient strength to allow them to be fed to a further processing operation, e.g. a trimming operation. In this case, the change in length resulting from "shrinkage and creep" occurs on such a small scale that it lies within the tolerance limits defined as standard, so that after this change in length finally ends, the panel dimensions are no longer subject to any significant change. A shorter maturing period in the so-called "hot sheds" is possible as a result of this and thus leads to an advantageous reduction in the energy requirements necessary for this and thus also to a reduction in the emission of $CO_2$ associated therewith.

The present invention is explained in more detail in the following examples without being restricted thereto.

**Example 1: Binder System V MB 40**

The binder system V MB 40 of a process according to the invention is composed of the components specified in the following Table 1 in the respective quantity ratios (mass percent). Besides the binder system the table also includes the quantity of wood used.

**Table 1**

| Component | Remarks | Proportion [%] |
|---|---|---|
| Portland cement | binder 1 | 25.55 |
| gypsum | binder 2 | 8.74 |
| Istra cement 40 | accelerating admixture | 8.74 |
| PE2 cement accelerator | | 0.70 |
| wood | | 23.03 |
| $MgCl_2$ | | 0.68 |
| VP 217 | flow agent | 0.17 |
| water | | 32.28 |
| Total | | 100.00 |

**Example 2: Binder System V MB 40 White Cement**

The binder system V MB 40 white cement of a process according to the invention is composed of the components specified in the following Table 2 in the respective quantity ratios (mass percent). Besides the binder system the table also includes the quantity of wood used.

**Table 2**

| Component | Remarks | Proportion [%] |
|---|---|---|
| white cement | binder 1 | 26.73 |
| gypsum | binder 2 | 8.91 |
| Istra cement 40 | accelerating admixture | 8.91 |
| wood | | 19.80 |
| VP 217 | flow agent | 0.36 |
| water | | 35.29 |
| Total | | 100.00 |

**Example 3: Binder System V MB 50 L4**

The binder system V MB 50 L4 of a process according to the invention is composed of the components specified in the following Table 3 in the respective quantity ratios (mass percent). Besides the binder system the table also includes the quantity of wood used.

**Table 3**

| Component | Remarks | Proportion [%] |
|---|---|---|
| white cement | binder 1 | 29.11 |
| gypsum | binder 2 | 9.70 |
| Istra cement 50 | accelerating admixture | 9.70 |
| PE2 cement accelerator | | 0.81 |
| wood | | 21.56 |
| lithium carbonate | accelerating admixture | 0.01 |
| VP 217 | flow agent | 0.29 |
| water | | 28.81 |

(continued)

| Component | Remarks | Proportion [%] |
|---|---|---|
| Total | | 100.00 |

### Example 4: Binder System V MB P 80

The binder system V MB P 80 of a process according to the invention is composed of the components specified in the following Table 4 in the respective quantity ratios (mass percent). Besides the binder system the table also includes the quantity of wood used.

**Table 4**

| Component | Remarks | Proportion [%] |
|---|---|---|
| Istra cement P 80 | binder 1 | 41.23 |
| gypsum | binder 2 | 7.28 |
| PE2 cement accelerator | | 0.81 |
| wood | | 21.56 |
| lithium carbonate | accelerating admixture | 0.02 |
| VP 217 | flow agent | 0.29 |
| water | | 28.8 |
| Total | | 100.00 |

### Comparative Example 1: binder system HAD fine 25

The binder system HAD fine 25 is known in the prior art and is based, amongst others, on the components superfine caustic calcined magnesite and $MgSO_4$.

### Comparative Example 2: binder system Heraklith M 25

The binder system Heraklith M 25 is known in the prior art and is based, amongst others, on the components superfine caustic calcined magnesite, $MgSO_4$ and aluminium sulphate.

### Comparative Example 3: binder system Heraklith C25

The binder system Heraklith C25 is known in the prior art and is based, amongst others, on the components superfine caustic calcined magnesite and $MgCl_2$.

### Example 5: Examination of the swelling and shrinking behaviour

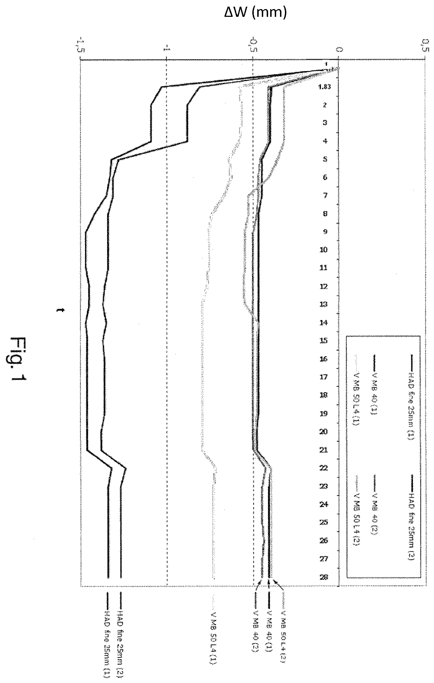

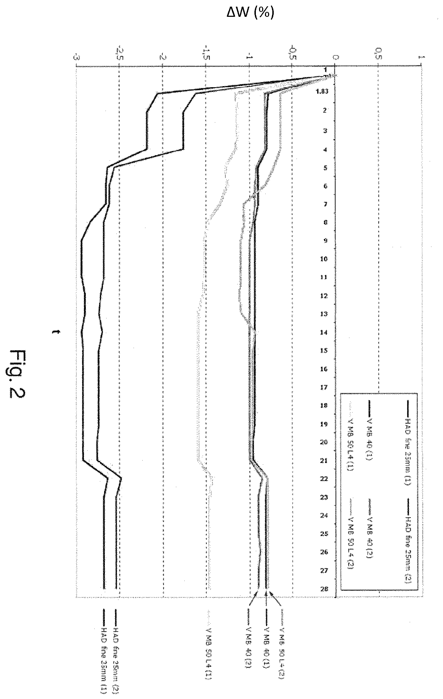

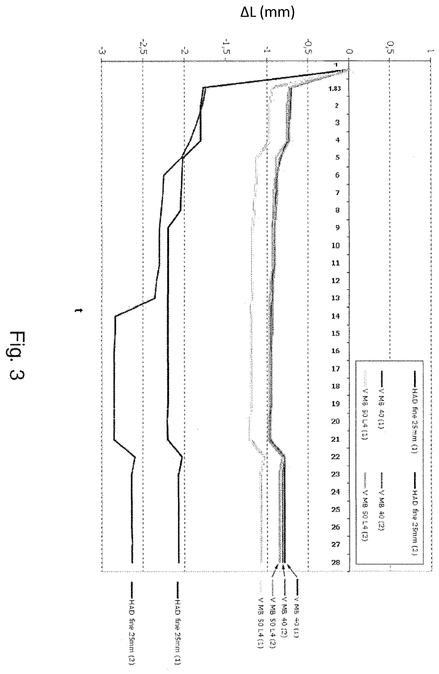

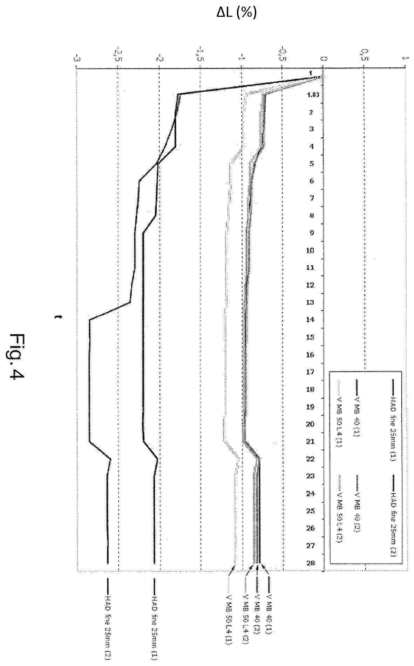

2 wood wool lightweight building elements in each case were produced using the conventional binder system HAD fine 25 and also by means of the binder systems according to Examples 1 and 3 (i.e. V MB 40 and V MB 50 L4).
The swelling and shrinking behaviour of these wood wool lightweight building elements was recorded over a period of 28 days and shown graphically in Figures 1 to 4 in the form of absolute and relative change in length and width. In this case, the swelling and shrinking behaviour was determined by means of a climate chamber, including the acquisition of data relating to relative air humidity and temperature, and by means of mechanical distance sensors for determination of the changes in length.
Wherever reference is made herein to measurement of swelling and/or shrinkage this is preferably determined when maintaining the wood wool lightweight building elements at ambient conditions which herein means a temperature between about 18° C and 22 °C (preferably about 20°C), a relative humidity of between about 50% and 90% (preferably between about 60% and 80%) and atmospheric pressure (including ordinary variations in atmospheric pressure).
It is directly evident from these graphic representations of Figures 1 to 4 that the wood wool lightweight building elements produced using a binder system according to the examples exhibit a significantly lower swelling and shrinking behaviour. This effect is clearly evident from a comparison with the standard.

**Example 6: Examination of the bending strength**

Wood wool lightweight building element were firstly produced using the binder systems according to the preceding Examples 1 and 3 (i.e. V MB 40 and V MB 50 L4 including modifications thereof V MB 50 L, V MB 50 L2 and V MB 50 L3 respectively with different lithium carbonate content), as well as using conventional binder systems (V 50.3, bituminous mix BFM).

The corresponding wood wool lightweight building elements were additionally subjected to a bending strength test to determine the influence of the binder systems in this regard. The bending strength measurement was conducted in accordance with method A according to EN 12089 and is conducted as follows:

Test apparatus: Zwick universal test machine

Sample selection: contrary to the specifications of EN 12089, the support spacing for wood wool lightweight building samples is fixed at 650 mm. This results in a minimum sample length of 750 mm, larger sample lengths (respectively in equal lengths projecting over the support) are permissible up to a length of 1300 mm.

Measurement process: the prepared samples are laid centrically on the two supports in the lower test location of the universal test machine. The bending blade is then lowered (parallel to the support lines) and the panel is subjected to bending stress until the maximum force is exceeded. In this case, the testing speed corresponding to the traversing speed amounts to 10 mm/minute.

Evaluation: maximum force in N or bending strength in N/mm$^2$ or in kPa (1 kN/m2 = 1 kPa)

Calculation formula:

$$\sigma_b = 3 \cdot 10^3 \frac{F_m \cdot L}{2 \cdot b \cdot d^2} \quad \text{or simplified} \quad \sigma_b = 1.5 \cdot 10^3 \frac{F_m \cdot L}{b \cdot d^2}$$

wherein

$\sigma_b$ ...   bending strength in kPa
$F_m$ ...   applied maximum force in N
L ...   the span between the supports in mm
b ...   the width of the sample body in mm
d ...   the thickness of the sample body in mm

For the evaluation the comparative value is the mean value of the test results of the zero sample (standard product produced on the belt moulding machine). In this case, the results listed in the following Table 5 were obtained.

**Table 5**

| Test | Fresh | | Matured 24 hours | |
|---|---|---|---|---|
| | Bending Strength [kPa] | Bulk Density [kg/m$^3$] | Bending Strength [kPa] | Bulk Density [kg/m$^3$] |
| V MB 40 | 844.14 | 466 | 2317.86 | 515 |
| | 1182.03 | 509 | 1703.84 | 455 |
| | 1097.39 | 495 | 1762.97 | 483 |
| | 1237.61 | 513 | 1735.94 | 463 |
| | | | | |
| V MB 50 L | | | 1881.25 | 465 |
| | | | 1927.44 | 470 |
| | | | 1955.16 | 477 |

(continued)

| Test | Fresh | | Matured 24 hours | |
|---|---|---|---|---|
| | Bending Strength [kPa] | Bulk Density [kg/m$^3$] | Bending Strength [kPa] | Bulk Density [kg/m$^3$] |
| | | | 1627.03 | 462 |
| | | | | |
| V MB 50 L2 | | | 1630.90 | 454 |
| | | | 1807.71 | 484 |
| | | | 1994.20 | 487 |
| | | | 2133.68 | 497 |
| | | | | |
| V MB 50 L3 | | | 1501.11 | 455 |
| | | | 1489.56 | 491 |
| | | | 1718.75 | 481 |
| | | | 1962.84 | 511 |
| | | | | |
| V MB 50 L4 | 1056.84 | 492 | 2039.06 | 473 |
| | 1327.07 | 502 | 2695.84 | 522 |
| | 1486.49 | 528 | 2428.96 | 519 |
| | 1067.94 | 483 | 1732.53 | 464 |
| | | | | |
| V 50.3 | 989.69 | 480 | 1403.36 | 493 |
| | 1031.11 | 493 | 1262.31 | 471 |
| | 1093.25 | 485 | 1216.04 | 469 |
| | 1015.10 | 495 | 1263.88 | 497 |
| | | | | |
| OM BFM | 1042.46 | 470 | 1637.71 | 467 |
| | 1570.85 | 506 | 2156.32 | 518 |
| | 1418.11 | 528 | 1614.54 | 461 |
| | 1219.71 | 479 | 2090.61 | 496 |

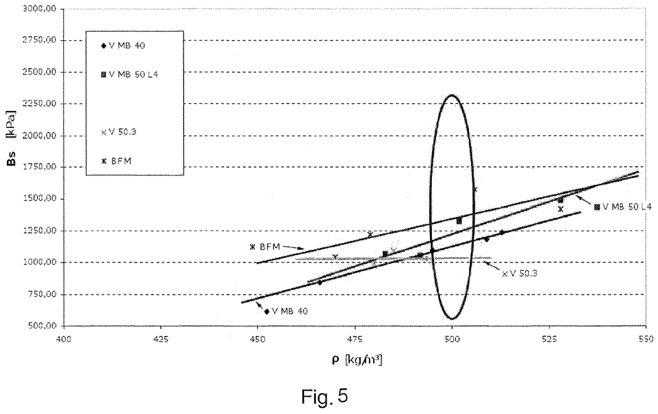

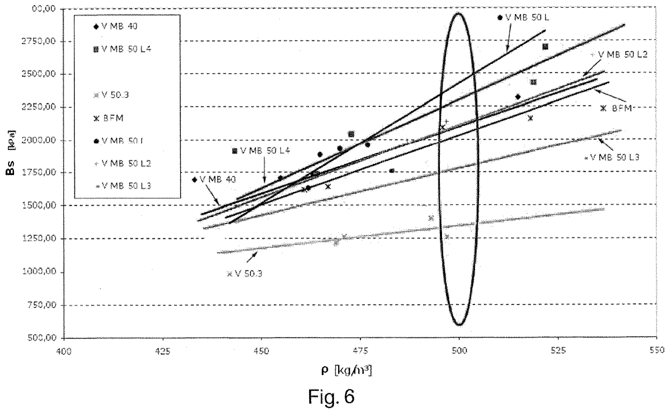

The diagrams shown in Figures 5 and 6 illustrate that wood wool lightweight building elements that have been produced using a binder system according to the examples not only exhibit an advantageously low shrinkage behaviour but also possess a surprisingly high bending strength.

Embodiments of the present invention:

- allow the boards to reach sufficient bending strength to allow then to be processed in to finished wood wool lightweight building elements within less than 72 hours, less than 48, less than 44 hours, less than 36 hours or less than 24 hours from manufacture; and/or
- have a level of dimensional stability such that their change in length after 72 hours, or 48 hours, or preferably 44 hours is no more than 1.5mm, preferably no more than 1.2mm, more preferably no more that 1mm and/or no more than 1.5%, preferably no more than 1.2 % and more preferably no more than 1%; and/or

- have a level of dimensional stability such that their change in width after 72 hours, or 48 hours, or preferably 44 hours is no more than 0.8mm, preferably no more than 0.7mm, more preferably no more than 0.6mm and/or no more than 1.5%, preferably no more than 1.2 % and more preferably no more that 1mm;

particularly when stored in hot shed conditions or when stored at ambient conditions as defined herein.

Furthermore, wood wool lightweight building elements produced according to at least some embodiments of the invention have levels or water resistance and/or humidity resistance that allow them to be used in outside or external applications.

## Claims

1. Process for the production of a wood wool lightweight building element comprising brittle wood wool fibres arranged in irregular geometry, distributed inside the building element in the form of an open-pore three dimensional lattice and connected to one another by means of a binder system;
   in which the process comprises

   (a) providing wood wool fibres,
   (b) applying to the wood wool fibres a binder system in the form of a solution or dispersion, wherein the binder system can contain further solvents or dispersants such as water in suitable quantities to obtain a corresponding solvent or dispersion, the said solution or dispersion comprising:

      (i) at least a first and a second binder, which are different from one another,
      (ii) at least one flow agent, and
      (iii) at least one reaction accelerator;

   (c) applying the mixture of wood wool fibres and binder system obtained under (b) to a support, and
   (d) pressing the wood wool fibres, if necessary with the supply of thermal energy.

2. Process for the production of a wood wool lightweight building element according to claim 1, wherein, in step (b) of applying the binder system to the wood wool fibres, the proportion of binder in relation to the total wood wool lightweight building element lies in the range 10-40% by mass.

3. Process for the production of a wood wool lightweight building element according to claim 1 or claim 2, wherein the first and second binders are selected independently of one another from the group consisting of Portland cement, white cement, aluminous cement, high-alumina cement and gypsum.

4. Process for the production of a wood wool lightweight building element according to claim 3, wherein the first binder is gypsum and the second binder is cement, notably selected from the group consisting of Portland cement, white cement, aluminous cement, high-alumina cement.

5. Process for the production of a wood wool lightweight building element according to one of claims 1 to 4, wherein the quantity ratio in mass% of the first binder to the second binder lies in the range 95:5% to 65:35%.

6. Process for the production of a wood wool lightweight building element according to one of claims 1 to 5, wherein the at least one flow agent is selected from the group comprising polycarboxylate ethers (PCE), lignin sulphonates, melamine formaldehyde sulphonates, naphthalene formaldehyde sulphonates, polycarboxylates, hydroxycarboxylic acids and salts thereof as well as combinations thereof.

7. Process for the production of a wood wool lightweight building element according to one of claims 1 to 6, wherein the at least one reaction accelerator is an accelerating admixture.

8. Process for the production of a wood wool lightweight building element according to claim 7, wherein the accelerating admixture is selected from the group comprising alkali metal carbonates, alkali metal chlorides, aluminous cements, high-alumina cements and combinations thereof.

9. Process for the production of a wood wool lightweight building element according to one of claims 1 to 8, wherein the quantity of binder amounts to 15% to 80% by weight in relation to the total weight of the binder system.

10. Process for the production of a wood wool lightweight building element according to one of claims 1 to 9, wherein the quantity of flow agent amounts to 0.01% to 5% by weight in relation to the total weight of the binder system.

11. Process for the production of a wood wool lightweight building element according to one of claims 1 to 10, wherein the quantity of reaction accelerator amounts to 0.1% to 25% by weight in relation to the total weight of the binder system.

12. Process for the production of a wood wool lightweight building element according to one of claims 1 to 11, wherein the wood wool lightweight building element has a dimensional stability such that its change of length after 72 hours from its manufacture is less than 1.5%, preferably less than 1.2%, notably when stored in hot shed or ambient conditions.

13. Process for the production of a wood wool lightweight building element according to one of claims 1 to 12, wherein the wood wool lightweight building element has a dimensional stability such that its change of width after 72 hours is less than 1.5%.

14. Process for the production of a wood wool lightweight building element according to one of claims 1 to 13, wherein the wood wool fibres have a length of more than 8 cm and/or a width of 1 to 6 mm and/or a thickness of 0.2 to 0.5 mm.

15. Process for the production of a wood wool lightweight building element according to one of claims 1 to 14, wherein pressing the wood wool fibres comprises pressing the wood wool fibres between a pair of moving belts.

16. Process according to claim 15, wherein pressing the wood wool fibres between a pair of moving belts comprises supplying thermal energy.

**Patentansprüche**

1. Verfahren zur Herstellung eines Holzwolleleichtbauelements, umfassend spröde Holzwollefasern, die in unregelmäßiger Geometrie angeordnet, innerhalb des Bauelements in der Form eines offenporigen dreidimensionalen Gerüsts verteilt und mittels eines Bindemittelsystems miteinander verbunden sind, wobei das Verfahren umfaßt

   (a) Bereitstellen von Holzwollefasern,
   (b) Aufbringen eines Bindemittelsystems auf die Holzwollefasern in der Form einer Lösung oder Dispersion, wobei das Bindemittelsystem weitere Lösungsmittel oder Dispersionsmittel wie Wasser in geeigneten Mengen enthalten kann, um eine entsprechende Lösung oder Dispersion zu erhalten, wobei die Lösung oder Dispersion umfasst:

      (i) mindestens ein erstes und ein zweites Bindemittel, welche voneinander verschieden sind,
      (ii) mindestens ein Fließmittel, und
      (iii) mindestens ein Reaktionsbeschleuniger,

   (c) Aufbringen des unter (b) erhaltenen Gemisches aus Holzwollefasern und Bindemittelsystem auf einen Träger, und
   (d) Pressen der Holzwollefasern, falls erforderlich unter Zuführung von Wäremenergie.

2. Verfahren zur Herstellung eines Holzwolleleichtbauelements nach Anspruch 1, wobei in Schritt (b) des Aufbringens des Bindemittelsystems auf die Holzwollefasern, der Anteil von Bindemittel bezogen auf das gesamte Holzwolleleichtbauelement im Bereich von 10 bis 40 Massenprozent liegt.

3. Verfahren zur Herstellung eines Holzwolleleichtbauelements nach Anspruch 1 oder 2, wobei das erste und zweite Bindemittel unabhängig voneinander aus der Gruppe, bestehend aus Portlandzement, Weißzement, Tonerdezement, Tonerdeschmelzzement und Gips ausgewählt sind.

4. Verfahren zur Herstellung eines Holzwolleleichtbauelements nach Anspruch 3, wobei das erste Bindemittel Gips ist und das zweite Bindemittel Zement ist, insbesondere ausgewählt aus der Gruppe, bestehend aus Portlandzement, Weißzement, Tonerdezement und Tonerdeschmelzzement.

**5.** Verfahren zur Herstellung eines Holzwolleleichtbauelements nach einem der Ansprüche 1 bis 4, wobei das Mengenverhältnis in Massenprozent des ersten Bindemittels zu dem zweiten Bindemittel im Bereich von 95:5% bis 65:35% liegt.

**6.** Verfahren zur Herstellung eines Holzwolleleichtbauelements nach einem der Ansprüche 1 bis 5, wobei das mindestens eine Fließmittel ausgewählt ist aus der Gruppe, umfassend Polycarboxylatether (PCE), Ligninsulphonate, Melaminformaldehydsulfonate, Naphthalinformaldehydsulfonate, Polycarboxylate, Hydroxylcarbonsäuren und deren Salzen, als auch Kombinationen davon.

**7.** Verfahren zur Herstellung eines Holzwolleleichtbauelements nach einem der Ansprüche 1 bis 6, wobei der mindestens eine Reaktionsbeschleuniger ein Abbindebeschleuniger ist.

**8.** Verfahren zur Herstellung eines Holzwolleleichtbauelements nach Anspruch 7, wobei der Abbindebeschleuniger ausgewählt ist aus der Gruppe, umfassend Alkalimetallcarbonate, Alkalimetallchloride, Tonerdezemente, Tonerdeschmelzzemente und Kombinationen davon.

**9.** Verfahren zur Herstellung eines Holzwolleleichtbauelements nach einem der Ansprüche 1 bis 8, wobei die Menge an Bindemittel 15 bis 80 Gew.-%, bezogen auf das Gesamtgewicht des Bindemittelsystems, beträgt.

**10.** Verfahren zur Herstellung eines Holzwolleleichtbauelemets nach einem der Ansprüche 1 bis 9, wobei die Menge an Fließmittel 0,01 bis 5 Gew.-%, bezogen auf das Gesamtgewicht des Bindemittelsystems, beträgt.

**11.** Verfahren zur Herstellung eines Holzwolleleichtbauelemets nach einem der Ansprüche 1 bis 10, wobei die Menge an Reaktionsbeschleuniger 0,1 bis 25 Gew.-%, bezogen auf das Gesamtgewicht des Bindemittels, beträgt.

**12.** Verfahren zur Herstellung eines Holzwolleleichtbauelements nach einem der Ansprüche 1 bis 11, wobei das Holzwolleleichtbauelement eine Dimensionsstabilität aufweist, so dass seine Längenänderung nach 72 Stunden ab seiner Herstellung weniger als 1,5% beträgt, vorzugsweise weniger als 1,2%, insbesondere wenn es einer Warmhalle oder bei Umgebungsbedingungen gelagert wird.

**13.** Verfahren zur Herstellung eines Holzwolleleichtbauelements nach einem der Ansprüche 1 bis 12, wobei das Holzwolleleichtbauelement die Dimensionsstabilität aufweist, so dass seine Breitenänderung nach 72 Stunden weniger als 1,5% beträgt.

**14.** Verfahren zur Herstellung eines Holzwolleleichtbauelements nach einem der Ansprüche 1 bis 13, wobei die Holzwollefasern eine Länge von mehr als 8 cm und/oder eine Breite von 1 bis 6 mm und/oder eine Dicke von 0,2 bis 0,5 mm aufweisen.

**15.** Verfahren zur Herstellung eines Holzwolleleichtbauelements nach einem der Ansprüche 1 bis 14, wobei das Pressen der Holzwollefasern als Pressen der Holzwollefasern zwischen einem Paar sich bewegender Bänder umfaßt.

**16.** Verfahren nach Anspruch 15, wobei das Pressen der Holzwollefasern zwischen einem Paar sich bewegender Bänder das Zuführen von Wärmeenergie umfaßt.

## Revendications

**1.** Procédé de fabrication d'un élément de construction léger en laine de bois comprenant des fibres cassantes de laine de bois disposées en géométrie irrégulière, distribuées à l'intérieur de l'élément de construction sous la forme d'un treillis tridimensionnel à pores ouverts et connectées les unes aux autres au moyen d'un système de liant ; dans lequel le procédé comprend :

(a) mettre à disposition des fibres de laine de bois,
(b) appliquer aux fibres de laine de bois un système de liant sous la forme d'une solution ou d'une dispersion, où le système de liant peut comprendre en outre des solvants ou des dispersants tels que de l'eau en quantités adaptées à obtenir un solvant ou une dispersion correspondant, ladite solution ou dispersion comprenant :

(i) au moins un premier et un second liant, qui sont différents l'un de l'autre,

(ii) au moins un agent fluidifiant, et

(iii) au moins un accélérateur réactionnel ;

(c) appliquer le mélange de fibres de laine de bois et du système de liant obtenu dans (b) à un support, et

(d) presser les fibres de laine de bois, si nécessaire avec l'application d'énergie thermique.

2. Procédé de fabrication d'un élément de construction léger en laine de bois selon la revendication 1, où, à l'étape (b) appliquer le système de liant aux fibres de laine de bois, la proportion de liant par rapport à la totalité de l'élément de construction léger en laine de bois varie dans la gamme 10-40% en masse.

3. Procédé de fabrication d'un élément de construction léger en laine de bois selon la revendication 1 ou la revendication 2, dans lequel les premier et second liants sont sélectionnés de manière indépendante l'un de l'autre parmi le groupe consistant en du ciment de Portland, du ciment blanc, du ciment alumineux, du ciment à haute teneur en alumine et du gypse.

4. Procédé de fabrication d'un élément de construction léger en laine de bois selon la revendication 3, dans lequel le premier liant est du gypse et le second liant est du ciment, notamment sélectionné parmi le groupe consistant en du ciment de Portland, du ciment blanc, du ciment alumineux et du ciment à haute teneur en alumine.

5. Procédé de fabrication d'un élément de construction léger en laine de bois selon l'une des revendications 1 à 4, dans lequel le rapport massique en %en masse du premier liant par rapport au second liant se trouve dans la gamme de 95:5% à 65:35%.

6. Procédé de fabrication d'un élément de construction léger en laine de bois selon l'une des revendications 1 à 5, dans lequel l'au moins un agent fluidifiant est sélectionné parmi le groupe comprenant des éthers de polycarboxylate (PCE), des sulphonates de lignine, des sulphonates de mélamine formaldéhyde, des sulphonates de naphtalène formaldéhyde, des polycarboxylates, des acides hydrocarboxyliques et des sels de ceux-ci ainsi que des combinaisons de ceux-ci.

7. Procédé de fabrication d'un élément de construction léger en laine de bois selon l'une des revendications 1 à 6, dans lequel l'au moins un accélérateur réactionnel est un mélange accélérant.

8. Procédé de fabrication d'un élément de construction léger en laine de bois selon l'une des revendications 1 à 7, dans lequel le mélange accélérant est sélectionné parmi le groupe comprenant des carbonates de métal alcalin, des chlorures de métal alcalin, des ciments alumineux, des ciments à haute teneur en alumine et des combinaison de ceux-ci.

9. Procédé de fabrication d'un élément de construction léger en laine de bois selon l'une des revendications 1 à 8, dans lequel la quantité de liant est de 15% à 80% en masse par rapport à la masse totale du système de liant.

10. Procédé de fabrication d'un élément de construction léger en laine de bois selon l'une des revendications 1 à 9, dans lequel la quantité d'agent fluidifiant est de 0,01% à 5% en masse par rapport à la masse totale du système de liant.

11. Procédé de fabrication d'un élément de construction léger en laine de bois selon l'une des revendications 1 à 10, dans lequel la quantité d'accélérateur réactionnel est de 0,1% à 25% en masse par rapport à la masse totale du système de liant.

12. Procédé de fabrication d'un élément de construction léger en laine de bois selon l'une des revendications 1 à 11, dans lequel l'élément de construction léger en laine de bois a une stabilité dimensionnelle de sorte que sa variation de longueur 72 heures après sa fabrication est inférieure à 1,5%, de préférence inférieure à 1,2%, notamment lorsque stocké dans un hangar chaud ou dans des conditions ambiantes.

13. Procédé de fabrication d'un élément de construction léger en laine de bois selon l'une des revendications 1 à 12, dans lequel l'élément de construction léger en laine de bois a une stabilité dimensionnelle de sorte que sa variation de largeur après 72 heures de inférieure à 1,5%.

**14.** Procédé de fabrication d'un élément de construction léger en laine de bois selon l'une des revendications 1 à 13, dans lequel les fibres de laines de bois ont une longueur de plus de 8 cm et/ou une largeur de 1 à 6 mm et/ou une épaisseur de 0,2 à 0,5 mm.

**15.** Procédé de fabrication d'un élément de construction léger en laine de bois selon l'une des revendications 1 à 14, dans lequel presser les fibres de laine de bois comprend presser les fibres de laine de bois entre une paire de courroies en mouvement.

**16.** Procédé selon la revendication 15, dans lequel presser les fibres de laine de bois entre une paire de courroies en mouvement comprend l'application d'énergie thermique.

Fig. 1

Fig. 2

Fig. 3

Fig. 4

Fig. 5

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5858083 A
- JP 2007238368 A